# EUROPEAN PATENT APPLICATION

(11) **EP 1 234 629 A1**
(43) Date of publication of application: **28.08.2002**
(21) Application number: 01830133.3
(22) Date of filing: 27.02.2001
(51) Int. Cl.: B23D 55/08, B28D 1/08

(54) **Device for reciprocating a band saw perpendicular to its longitudinal axis**

(71) Applicant: So.Fin.A. S.r.l., 23020 Poggiridenti (Sondrio) (IT)
(72) Inventor: Testini, Pietro Antonio, 23020 Poggiridenti (Sondrio) (IT); Testini, Stefano, 23020 Poggiridenti (Sondrio) (IT)
(74) Representative: Marchi, Massimo, Dr.

(57) **Abstract**

Actuating device (35) for a toothed-band cutting blade (4) of a sawing machine (1) is proposed; the cutting blade (4) is driven with a longitudinal translatory movement relative to a workpiece (9) to be cut; a blade section (14) lies in a predefined cutting plane and has a first end portion (114) on the entry side of the workpiece (9) and a second end portion (214) on the exit side of the workpiece (9); the actuating device (35) comprises a thrusting element (37) designed to engage with the second end portion (214) of the blade section (14) so as to impart to the second end portion (214) a movement substantially perpendicular to said longitudinal translatory movement and having a predefined frequency.

## Description

The present invention relates to an actuating device for a cutting blade of a band sawing machine for metals.

Sawing machines for metal workpieces, equipped with a cutting blade formed by an endless toothed metal band, are known. The cutting blade is wound around two or more pulleys - one driving and the others driven - which cause the continuous translation thereof with respect to a workpiece to be cut. Cutting of the workpiece is performed by a blade section delimited by two blade-guiding blocks which are movable with respect to each other in the longitudinal direction or fixed. The blade-guiding blocks guide the blade-section used for cutting on the entry side of the workpiece and on the exit side of the workpiece. The blade-guiding blocks have the function of ensuring that the blade section used for cutting assumes a predefined, vertical, horizontal or oblique position, depending on the position of the workpiece and the type of cut to be performed, and of keeping the blade stably aligned with respect to the workpiece in order to ensure the straightness of the cut.

Each blade-guiding block comprises a lower pair and an upper pair of lateral roller or ball bearings, two hard-metal plates and a fixed pin carrying an upper roller bearing. The lateral roller or ball bearings and the plates are located alongside the cutting blade. The upper roller bearing makes contact with the rear edge of the cutting blade and exerts a cutting thrust with a constant value.

The inventors have found that conventional sawing machines have difficulty in performing certain types of machining operations, such as the cutting of hard metal materials, on account of an inadequate penetration of the blade into the workpiece and/or insufficient discharging of the machining rejections (swarf). The cutting blade tends to jump from the workpiece, to jam and vibrate. These machining difficulties negatively affect the productive and qualitative performance of the machines.

The object of the invention is to overcome the drawbacks of known sawing machines.

The abovementioned object is achieved, in accordance with the invention, by an actuating device for a toothed-band cutting blade of a sawing machine, said cutting blade being driven with a longitudinal translatory movement relative to a workpiece to be cut and having a cutting edge and a rear edge, a section of said blade lying in a predefined cutting plane and having a first end portion on the entry side of said workpiece and a second end portion on the exit side of said workpiece, characterized in that it comprises thrusting means designed to engage with said second end portion of said blade section so as to impart to said second end portion a movement substantially perpendicular to said longitudinal translatory movement, said substantially perpendicular movement having a predefined frequency.

Preferably, said thrusting means comprise an eccentric element able to rotate at a predefined speed, said eccentric element being engaged with the rear edge of said second end portion of said blade section.

Advantageously, said eccentric element is integral with a pin operationally connected to a motor capable of causing it to rotate at said predefined speed.

Typically, said eccentric element is a cam.

Preferably, said actuating device is associated with a blade-guiding block which guides said second end portion of said blade section on the exit side of said workpiece.

Advantageously, said predefined frequency is adjusted depending on the speed of longitudinal translation of said cutting blade and the hardness of said workpiece.

Typically, the combination of said longitudinal translatory movement with said perpendicular movement produces, in said cutting plane, an undulating movement of said blade section which has a maximum amplitude in said second end portion and is zero in said first end portion.

Therefore, the thrusting means move said second end portion of the blade, engaging it with and disengaging it from the workpiece to be cut. They also cause the thrust exerted by the second end portion of the blade on the workpiece to vary sinusoidally.

All this ensures an optimum penetration of the blade into the workpiece during machining and efficient removal of the swarf.

The improved working conditions of the blade during cutting also allow uncontrolled vibrations and bothersome noise to be eliminated.

A greater duration of the cutting blade, a reduction in the cutting time and savings in energy compared to a conventional sawing machine are thus obtained. The final result is an improvement in the productive and qualitative performance of the machine.

Characteristic features and advantages of the invention will now be illustrated with reference to an embodiment represented by way of a non-limiting example in the accompanying figures in which:
Fig. 1 is a partial front view of a sawing machine with a cutting blade and an actuating device for said blade, in accordance with the invention;
Fig. 2 is a front view, on a larger scale, of the cutting blade and two blade-guiding blocks of the sawing machine of Fig. 1;
Fig. 3 is a sectional view, on a larger scale, along the plane indicated by III-III in Fig. 2;
Fig. 4 is a sectional view, on a larger scale, along the plane indicated by IV-IV in Fig. 3;
Fig. 5 show the displacement of the cutting blade according to Fig. 2 obtained with the actuating device according to the invention;
Fig. 6 is a front view of a pin and an eccentric element of the actuating device according to the invention;
Fig. 7 shows a top plan view of the pin and the eccentric element of Fig. 6;
Fig. 8 is a schematic illustration of operation of the actuating device according to the invention.

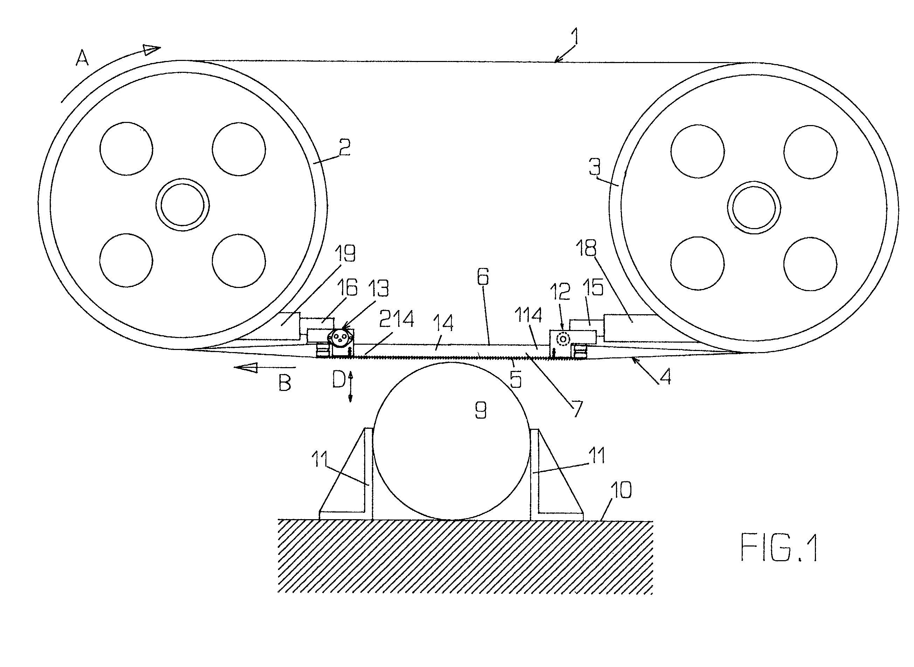

Fig. 1 shows a sawing machine 1 for metal parts, comprising a driving pulley 2 and an idle driven pulley 3. A cutting blade 4 is wound onto the pulleys 2 and 3. The cutting blade 4 is formed by an endless toothed metal band which has a sawtooth cutting edge 5, a rear edge 6 and sides 7. The blade 4 has a thickness which ranges from 1.3 to 2 mm and is made of spring steel with a cutting edge made of very highspeed steel or widia.

The driving pulley 2 rotates in the direction of the arrow A and drives the cutting blade 4 with a longitudinal translatory movement (arrow B), causing it to advance continuously with respect to a workpiece 9 to be cut. The workpiece 9 is supported by a table 10 in which it is clamped by means of jaws 11. The cutting blade 4 has, associated with it, two movable blade-guiding blocks 12 and 13 which have the function of delimiting a blade section 14 used during cutting of the workpiece 9 and of orienting it in a cutting plane. The blade section 14 has an end portion 114 on the entry side of the workpiece 9 and an end portion 214 on the exit side of the workpiece 9. The blade-guiding block 12 guides the end portion 114 of the blade section 14, while the blade-guiding block 13 guides the end portion 214.

The blade-guiding blocks 12 and 13 are mounted on respective support rods 15 and 16 slidable in supports 18 and 19. The blade-guiding blocks 12 and 13 may be moved towards each other or away from each other in the longitudinal direction so as to vary the length of the blade section 14, which is used during cutting, depending on the dimensions of the workpiece 9. The blade-guiding blocks 12 and 13 modify the horizontal position of the blade 4 on the pulleys 2 and 3 and ensure that the blade section 14 assumes a vertical position suitable for cutting the workpiece 9.

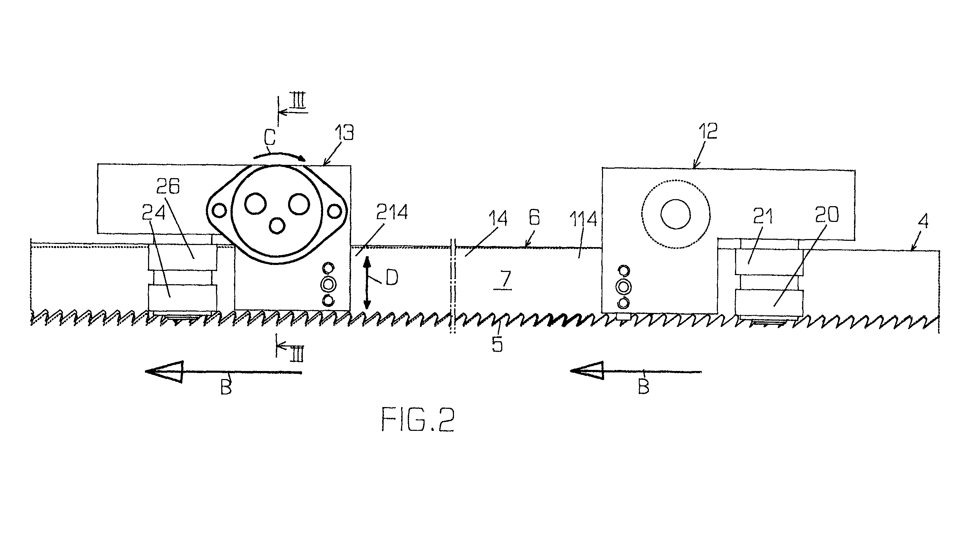

The blade-guiding block 12 is of the conventional type and comprises a lower pair and an upper pair of lateral roller or ball bearings, two of which are indicated by 20 and 21 in Fig. 2. The blade-guiding block 12 also comprises two hard-metal plates, not shown. The lateral bearings and the plates are located on the sides 7 of the cutting blade 4 and have the function of orienting and aligning the end portion 114 of the blade section 14 in the cutting plane, causing it to assume the vertical position.

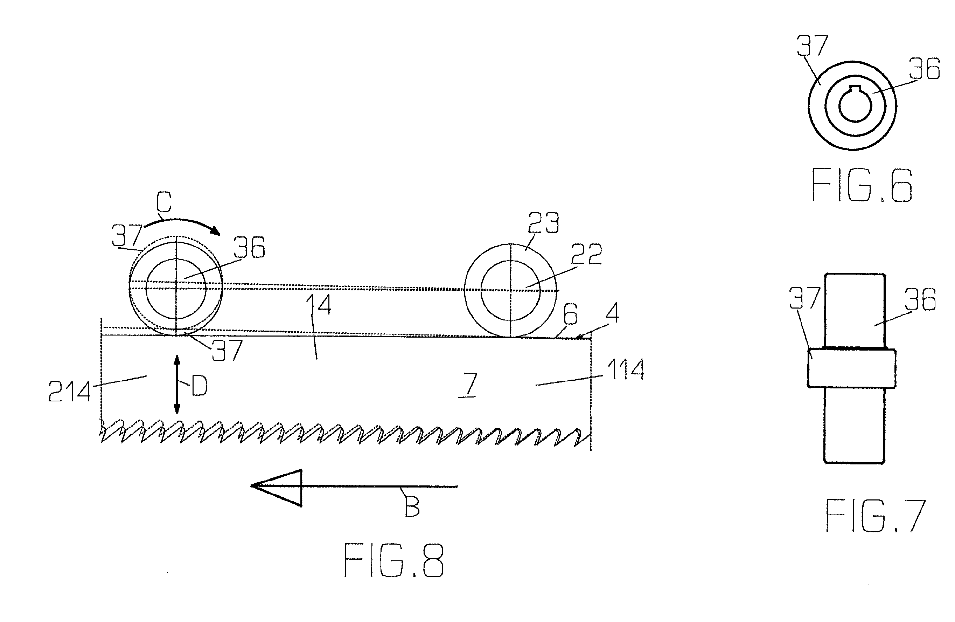

The blade-guiding block 12 also comprises a fixed pin 22 and an upper roller bearing 23, which are shown schematically in Fig. 8. The roller bearing 23 is mounted on the pin 22 and is free to rotate with respect thereto. The roller bearing 23 makes contact with the rear edge 6 of the cutting blade 4 and rotates idle on the pin 22, driven by the blade during its longitudinal translatory (advancing) movement. The roller bearing 23 exerts on the end portion 114 of the blade section 114 a thrust with a constant value at the beginning of the cut into the workpiece 9.

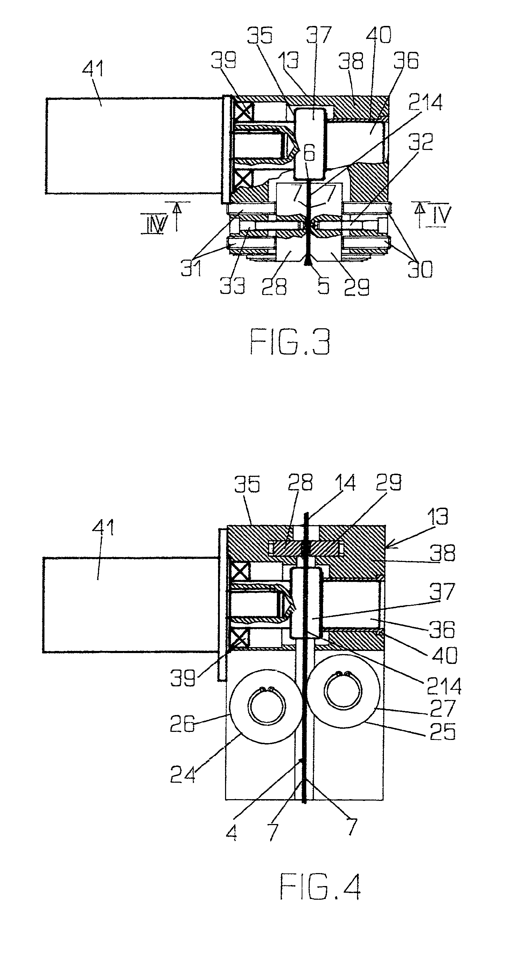

The blade-guiding block 13 comprises (Fig. 3 and 4) a lower pair and an upper pair of lateral roller or ball bearings 24, 25 and 26, 27 and two plates 28 and 29 made of hard metal, such as widia. The bearings 24, 25 and 26, 27 and the plates 28 and 29 are located on the sides 7 of the blade 4 and have the function of maintaining the orientation and alignment of the end portion 214 of the blade section 14 in the cutting plane. The plates 28 and 29 are located at a distance such as to delimit a slit which allows the alignment of the blade section 14 to be precisely maintained. The width of the slit is adjusted depending on the thickness of the blade 4 by means of adjusting screws 30 and 31 and locking screws 32 and 33 which allow the distance between the plates 28 and 29 to be varied micrometrically. The bearings 24 and 25 of the lower pair and the bearings 26 and 27 of the upper pair have an interaxial distance such as to delimit a gap which allows alignment of the blade 4 to be maintained with a certain amount of play.

The blade-guiding block 13 is also provided with an actuating device 35 according to the invention. The actuating device 35 comprises a pin 36 and an eccentric element 37 integral therewith (Figs. 3, 4, 6-8). The eccentric element 37 is a cam. The eccentric element 37 has a lift of about 3 mm. The pin 36 is mounted rotatably in a support 38 by means of a bearing 39 and a bush 40 and is operationally connected to a motor 41 able to cause it to rotate at a predefined speed (arrow C), for example 30 m/sec. The motor 41, is for example, of the hydraulic type. The speed of rotation of the pin 36 and the eccentric element 37 is adjusted depending on the speed of longitudinal translation of the cutting blade 4 and the hardness of the workpiece 9. The speed of longitudinal translation of the blade 4 ranges from 1 to 120 m/min.

The eccentric element 37 makes contact with the rear edge 6 of the blade 4 and imparts to the end portion 214 of the blade an alternating movement substantially perpendicular to the longitudinal translatory movement of the blade. The movement of the end portion 214 has a predefined frequency which depends on the speed of longitudinal translation of the blade 4 and the hardness of the workpiece. The movement of the end portion 214 occurs in the cutting plane and has a vertical direction (double arrow D) as shown in Fig. 8.

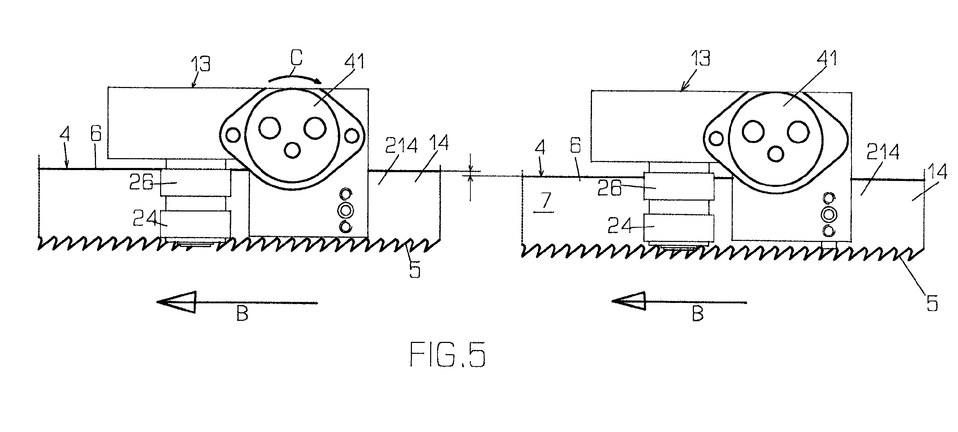

The combination of the longitudinal translatory movement of the blade 4 with the perpendicular movement of the end portion 214 produces, in the cutting plane, an undulating movement of the blade section 14 which has a maximum amplitude in the end portion 214 and is zero in the end portion 114. The undulating movement is very gentle. The end portion 214 is subject to vertical displacements with a maximum amplitude of about 3 mm (Fig. 5), while the end portion 114 of the blade, on the entry side of the workpiece 9, does not perform displacements which are perpendicular (vertical) with respect to the translatory movement and moves only with a longitudinal translatory motion because the roller bearing 23 prevents perpendicular displacements.

The rotating eccentric element 37 exerts a thrust with a variable intensity and sinusoidal progression on the end portion 214 of the blade section 14. This thrust is greater than the constant thrust exerted by the roller bearing 23 on the end portion 114.

The movement of the end portion 214 of the blade favours optimum penetration of the blade into the workpiece 9 and total elimination of the swarf from the cut of the workpiece 9. It is thus possible to increase the speed of translation of the blade by about 50%, reducing the cutting time and the energy consumption. A greater duration of the blade 4 is also obtained of about 30%. A reduction in the noise caused by the blade 4 during cutting is also obtained.

## Claims

1. Actuating device (35) for a toothed-band cutting blade (4) of a sawing machine (1), said cutting blade (4) being driven with a longitudinal translatory movement relative to a workpiece (9) to be cut and having a cutting edge (5) and a rear edge (6), a section of said blade (14) lying in a predefined cutting plane and having a first end portion (114) on the entry side of said workpiece (9) and a second end portion (214) on the exit side of said workpiece (9), **characterized in that** it comprises thrusting means (37) designed to engage with said second end portion (214) of said blade section (14) so as to impart to said second end portion (214) a movement substantially perpendicular to said longitudinal translatory movement, said substantially perpendicular movement having a predefined frequency.

2. Actuating device (35) according to Claim 1, **characterized in that** said thrusting means (37) comprise an eccentric element able to rotate at a predefined speed, said eccentric element (37) being engaged with the rear edge (6) of said second end portion (214) of said blade section (14).

3. Actuating device (35) according to Claim 2, **characterized in that** said eccentric element (37) is integral with a pin (36) operationally connected to a motor (41) capable of causing it to rotate at said predefined speed.

4. Actuating device (35) according to Claim 1, **characterized in that** said eccentric element (37) is a cam.

5. Actuating device (35) according to Claim 1, **characterized in that** it is associated with a blade-guiding block (13) which guides said second end portion (214) of said blade section (14) on the exit side of said workpiece (9).

6. Actuating device (35) according to Claim 1, **characterized in that** said predefined frequency is adjusted depending on the speed of longitudinal translation of said cutting blade (4) and the hardness of said workpiece (9).

7. Actuating device (35) according to Claim 1, **characterized in that** the combination of said longitudinal translatory movement with said perpendicular movement produces, in said cutting plane, an undulating movement of said blade section (14) which has a maximum amplitude in said second end portion (214) and is zero in said first end portion (114).
